Europäisches Patentamt

European Patent Office

Office européen des brevets

(19)

(11) Veröffentlichungsnummer: **0 028 390**
**A2**

(12) **EUROPÄISCHE PATENTANMELDUNG**

(21) Anmeldenummer: **80106621.8**

(22) Anmeldetag: **29.10.80**

(51) Int. Cl.³: **F 16 H 3/46**
**F 01 P 5/04**

(30) Priorität: **31.10.79 DE 2943959**

(43) Veröffentlichungstag der Anmeldung:
**13.05.81 Patentblatt 81/19**

(84) Benannte Vertragsstaaten:
**AT BE CH FR GB IT LI NL SE**

(71) Anmelder: **Kysor Industries S.A.**
**Centre International Rogier Place Rogier 13 (Hall Hermès 25e étage)**
**B-1000 Brüssel(BE)**

(72) Erfinder: **Otterbach, Gerd, Dipl.-Ing.**
**Hartstrasse 24**
**D-8724 Schonungen-Hausen(DE)**

(74) Vertreter: **Schmetz, Bruno, Dipl.-Ing. et al,**
**Augustastrasse 14-16**
**D-5100 Aachen(DE)**

(54) Gestuft schaltbares Planetengetriebe.

(57) Bei einem gestuft schaltbaren Planetengetriebe ist das Getriebegehäuse (2,3;102,143) nur an dem Gehäuse eines Verbrennungskraftmotors abgestützt und die Antriebswelle (15;115;170) des Getriebes ist die Kurbelwelle des Verbrennungsmotors oder eine parallel versetzt gekoppelte Welle, die mit dem Getriebe über ein erstes Kupplungselement (18;118;171) in Form einer mit der Antriebswelle (15;115;170) drehfest verbundenen Kupplungsscheibe koppelbar ist, während die Abtriebswelle (39;139;176) im Getriebegehäuse (2,3;102,143) gelagert ist, ein Lüfterrad (40;67) trägt und mit dem Getriebe über ein zweites Kupplungselement (48;148;172) in Form einer mit der Abtriebswelle (39;139;176) drehfest verbundenen Kupplungsscheibe koppelbar ist.

./...

Fig.1

Patentanwälte

DIPL.-ING. BRUNO SCHMETZ
DIPL.-ING. WERNER KÖNIG

0028390

51 Aachen, den 27. Okt. 1980
Augustastraße 14-16 · Tel. (0241) 508051

- 1 -

## Gestuft schaltbares Planetengetriebe

Die Erfindung betrifft ein gestuft schaltbares Planetengetriebe mit einem Getriebegehäuse, einem Sonnenrad, einem Planetenradträger mit darin gelagerten Planetenrädern, einem Hohlrad sowie mit Kupplungselementen, welche die Elemente des Getriebes mit einer Antriebswelle und einer Abtriebswelle koppeln.

Gestuft schaltbare Planetengetriebe dieser Art sind bereits bekannt. So zeigt die US-PS 2 601 151 ein solches Getriebe, das zur Umformung der Motorleistung mit der Motorwelle gekoppelt ist. Dabei lagert das Sonnenrad auf der Motorwelle, welche die Antriebwelle des Getriebes ist, und seine Innenverzahnung kommt mit einer Außenverzahnung der Motorwelle in Eingriff, während das Sonnenrad andererseits gleichzeitig mit den Planetenrädern kämmt. Durch Lagerung des Getriebes auf der Antriebswelle und durch die Zahnradkopplung zwischen Antriebswelle und Getriebe werden die Schwingungen der Antriebswelle auf das Getriebe und dessen Abtriebswelle übertragen. Die Anwendung eines solchen Getriebes zum Antrieb eines Lüfters ist noch nicht bekannt.

Es ist bekannt, vor oder hinter dem Kühlerblock eines Verbrennungskraftmotors einen Lüfter vorzusehen, dessen Drehzahl starr gekoppelt ist mit derjenigen der Kurbelwelle des Motors. Ein solcher Lüfter ist also immer dann in Betrieb, wenn sich die Kurbelwelle dreht. Der Lüfter arbeitet also unverändert bei allen äußeren Temperaturschwankungen. Er paßt sich auch nicht der Leistung und der Temperatur des Motors an. Daraus ergibt sich in vielen Betriebszuständen eine Unterkühlung des Motors. Ferner folgt daraus, daß sehr oft für den Betrieb
des Lüfters Leistung aufgenommen werden muß, obwohl der Betrieb
des Lüfters an sich nicht erforderlich wäre.

Es ist nun inzwischen ebenfalls bekannt geworden, den Lüfter in Abhängigkeit von der Kühlwassertemperatur einzuschalten. Bei einem
derartigen Antrieb steuert ein Temperaturfühler ein Ventil, wodurch
bei entsprechendem Anstieg der Kühlwassertemperatur eine Kopplung
zwischen einer Lüfterwelle und einer anderen angetriebenen Welle, zum
Beispiel der Kurbelwelle, hergestellt wird. Dieser bekannte Antrieb
ermöglicht es also, in Abhängigkeit von der Kühlwassertemperatur einen
Lüfter zuzuschalten. Dabei kommt für den Lüfter nur eine der Motor-
Kurbelwellen-Drehzahl fest zugeordnete Betriebsdrehzahl in Betracht.
Mit dieser Drehzahl kann nun aber in vielen Fällen nicht ausreichend
genau der Kühlluftbedarf bereitgestellt werden, der jeweils erforderlich
ist.

Es ist ferner bekannt, einen Lüfter über eine der Motordrehzahl fest
zugeordnete Flüssigkeitskupplung anzutreiben. Dabei kann über einen
Temperaturfühler der Füllstand im Kupplungsgehäuse und damit der Schlupf
zwischen antreibender Welle und Lüfterrad variiert werden. Auf diese
Weise ist eine von den Grenzen "fast 0" bis etwa zur jeweiligen Kurbelwellendrehzahl stufenlose Anpassung der Lüfterdrehzahl an die jeweiligen
Temperaturverhältnisse möglich.

Die Aufgabe der vorliegenden Erfindung besteht nun darin, ein Getriebe
für einen Lüfterantrieb zu schaffen, das schwingungsfrei mit der Kurbelwelle eines Verbrennungskraftmotors verbunden ist und ausgehend von
der Kurbelwellendrehzahl eine mehrfach gestufte Lüfterdrehzahl ermöglicht.

Diese Aufgabe wird erfindungsgemäß bei einem Getriebe der
eingangs erwähnten Art dadurch gelöst, daß das Getriebegehäuse

- 3 -

nur an dem Gehäuse eines Verbrennungskraftmotors abgestützt ist und alle Bauteile des Planetengetriebes nur am Getriebegehäuse abgestützt sind, daß die Antriebswelle des Getriebes die Kurbelwelle des Verbrennungsmotors oder eine parallel versetzt gekoppelte Welle ist und mit dem Getriebe über ein erstes Kupplungselement in Form einer mit der Antriebswelle drehfest verbundenen Kupplungsscheibe koppelbar ist, während die Abtriebswelle im Getriebegehäuse gelagert ist, ein Lüfterrad trägt und mit dem Getriebe über ein zweites Kupplungselement in Form einer mit der Abtriebswelle drehfest verbundenen Kupplungsscheibe koppelbar ist.

Dieses Getriebe kann ohne weiteres an der Steuerseite eines Motors mit dem Motorgehäuse verbunden werden. Zweckmäßigerweise bildet dabei ein aus dem Motorgehäuse heraus vorstehender Abschnitt der Kurbelwelle unmittelbar die Antriebswelle. Diese Antriebswelle ist mit dem Lüftergetriebe also nur über ein Kupplungselement verbunden. Dies bedeutet, daß die Schwingungen der Kurbelwelle nicht auf den Lüfterantrieb übertragen werden. Es ist bei diesem Lüfterantrieb ohne weiteres möglich, neben der Drehzahl 0 noch drei weitere Drehzahlen einzustellen. Damit kann der Lüfter allen Anforderungen des Motorbetriebs angepaßt werden, auch dem Betrieb eines Motors mit Ladeluftkühlung und entsprechender Leistungscharakteristik.

Weiter sieht die Erfindung vor, daß die Antriebswelle durch das Gehäuse hindurchgeführt sein und aus diesem heraus vorstehen kann. Dabei ist es möglich, das herausstehende Kurbelwellenende mit Riemenscheiben oder Axialkupplungselementen zum Antrieb weiterer Hilfsaggregate mit Kurbelwellendrehzahl auszurüsten.

Ferner schlägt die Erfindung vor, daß die Abtriebswelle drehmomentübertragend mit einer Riemenscheibe z. B. für den Antrieb einer Wasserpumpe versehen werden kann.

- 4 -

Schließlich sieht die Erfindung noch vor, daß der Lüfterantrieb über
ein Zwischengehäuse am Motorgehäuse abgestützt ist, daß die Antriebswelle im Zwischengehäuse gelagert ist und eine Riemenscheibe trägt,
welche über einen Keilriemen mit einer Riemenscheibe der Kurbelwelle
in Antriebsverbindung steht.

Im folgenden Teil der Beschreibung werden einige Ausführungsformen
des Anmeldungsgegenstandes anhand von Zeichnungen beschrieben. Es zeigt:

Fig.   1 die obere Hälfte eines Axialschnitts eines rotationssymmetrischen
        Lüfterantriebs gemäß einer ersten Ausführungsform,

Fig.   2 einen Axialschnitt durch eine zweite Ausführungsform des erfindungsgemäßen Lüfterantriebs,

Fig.   3 einen axialen Teilschnitt einer weiteren Ausführungsform des
        erfindungsgemäßen Lüfterantriebs, bei der ein Zwischengehäuse
        vorgesehen ist und

Fig.   4 ein Getriebegehäuse gemäß einer weiteren Ausführungsform.

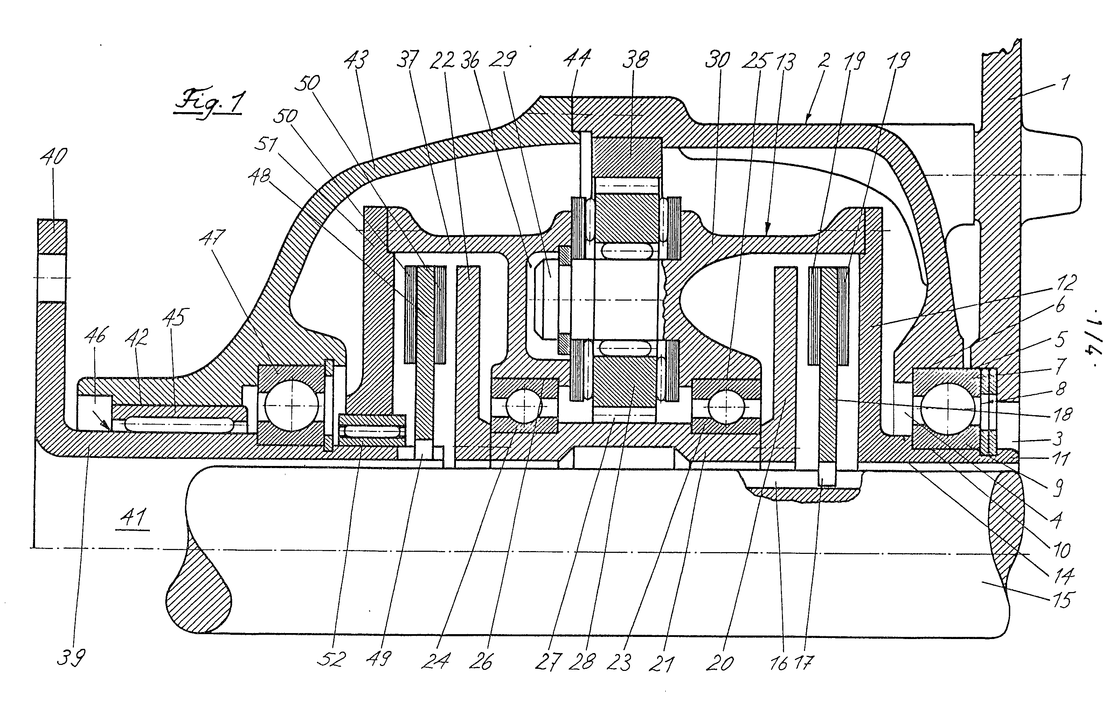

Die Fig. 1 zeigt auf ihrer rechten Seite einen Motordeckel 1 auf der
Steuerseite eines im übrigen nicht dargestellten Verbrennungskraftmotors.
Mit diesem Motordeckel 1 ist ein im wesentlichen rotationssymmetrischer
Gehäuseabschnitt 2 verbunden. Der Motordeckel 1 hat eine Bohrung 3,
mit der eine Bohrung 4 des Gehäuseabschnitts 2 fluchtet. Im Bereich
der Bohrungen 3 und 4 sind zwei einander angepaßte Ringschultern 5,6
vorgesehen, in die der Außenring 7 eines Wälzlagers 8 eingesetzt ist.
Dieses Wälzlager 8 hat einen Innenring 9, der auf einer Ringfläche 10
sitzt. Diese Ringfläche 10 wird von einem Bund 11 gebildet, der in
die Bohrungen 3,4 hineinragt und koaxial zu diesen verläuft. An den

Bund 11 schließt sich eine radial nach außen weisende Scheibe 12 an, die in ihrem radial äußeren Bereich mit einem Planetenradträger 13 fest verbunden ist.

Der Bund 11 hat eine zentrale Bohrung 14, durch die das aus dem Motor herausstehende Ende einer Kurbelwelle 15 hindurchragt. Die Kurbelwelle 15 ist mit mehreren axial verlaufenden Nuten 16 versehen, in die Zähne 17 eines scheibenförmigen ersten Kupplungselements 18 eingreifen. Somit wird eine drehfeste Verbindung zwischen Kurbelwelle 15 und Kupplungselement 18 erzeugt, welche die Schwingungen der Kurbelwelle nicht in das Planetengetriebe überträgt. Das Kupplungselement 18 ist mit Reibbelägen 19 beiderseits belegt. Durch ein nicht dargestelltes hydraulisch oder pneumatisch betätigtes Schaltorgan kann das Kupplungselement 18 in Axialrichtung verschoben werden. Bei Verschiebung des Kupplungselements 18 in der Zeichnung nach rechts kommt es an der Scheibe 12 zum Angriff. Wird dagegen das Kupplungselement 18 nach links verschoben, so greift sein Reibbelag 19 an einer Scheibe 20 an, die mit einer Sonnenradwelle 21 fest verbunden ist. Die Sonnenradwelle 21 trägt an ihrem anderen Ende ebenfalls eine Scheibe 22, die im wesentlichen spiegelsymmetrisch gleich ist der Scheibe 20. Die Sonnenradwelle 21 sowie die Scheiben 20,22 zeigen Durchgangsbohrungen, deren Durchmesser im wesentlichen gleich ist demjenigen der Bohrung 14. Die Kurbelwelle 15 führt durch diese Durchgangsbohrungen hindurch.

Auf die beiden Enden der Sonnenradwelle 21 ist jeweils ein Wälzlager 23,24 aufgesetzt. Diese Wälzlager sitzen in Bohrungen 25,26 des Planetenradträgers 13.

Die Sonnenradwelle 21 ist im Bereich zwischen den Wälzlagern 23,24 mit einer Außenverzahnung 27 (Sonnenrad) versehen. Mit dieser Außenverzahnung 27 kämmen drei gleichmäßig über den Umfang verteilt angeordnete Planetenräder 28. Jedes dieser Planetenräger 28 ist um einen
Lagerzapfen 29 drehbar gelagert, der von dem in der Zeichnung rechts
dargestellten Abschnitt 30 des zweigeteilten Planetenradträgers 13
ausgeht. Die drei Lagerzapfen 29 greifen dabei in Aussparungen 36
in einem zweiten Abschnitt 37 des Planetenradträgers 13 ein.

Die Planetenräder 28 kämmen in dem radial außenliegenden Bereich
mit einem Hohlrad 38, das mit einer Innenverzahnung versehen und in
den Gehäuseabschnitt 2 fest eingesetzt ist.

Der Lüfterantrieb weist an seinem von dem Motor abgewandten Ende eine
Abtriebswelle 39 auf, an die sich ein Flansch 40 zum Anschluß eines
nicht dargestellten Lüfterrades anschließt. Die Abtriebswelle 39 hat
eine Bohrung 41, deren Durchmesser im wesentlichen gleich ist demjenigen
der Bohrung 14. Die Kurbelwelle 15 ragt durch die Bohrung 41 hindurch
und steht über den Flansch 40 hinaus vor. Die Abtriebswelle 39 ragt
in eine Bohrung 42 eines zweiten Gehäuseabschnitts 43 hinein, der bei
44 mit dem Gehäuseabschnitt 2 verschraubt ist.

Auf der Außenfläche der Abtriebswelle 39 sitzt innerhalb der Bohrung
42 des Gehäuseabschnitts 43 ein Wälzlager 45. Am äußeren Ende des
Gehäuseabschnitts 43 ist ein Dichtungsring 46 im Bereich der Bohrung
42 angeordnet. Zur Abstützung der Abtriebswelle 39 am Gehäuseabschnitt
43 ist noch ein dem Wälzlager 45 benachbartes Lager 47 vorgesehen.

Die Abtriebswelle 39 ist in ihrem am weitesten in das Innere des von
den Abschnitten 2 und 43 gebildeten Gehäuses hineinragenden Ende gezahnt.
Ein scheibenförmiges zweites Kupplungselement 48 greift mit Zähnen 49
zwischen die Zähne der Abtrieswelle 39. Das Kupplungselement 48 ist mittels hydraulisch oder pneumatisch arbeitender Schaltorgane in axialer
Richtung verschiebbar. Es trägt beiderseits Reibbeläge 50. Wenn das
Kupplungselement 48 in der Zeichnung nach rechts verschoben wird, dann
greift der Reibbelag 50 an der Scheibe 22 an, die mit der Sonnenradwelle 21 fest verbunden ist. Wird aber das Kupplungselement 48 in der
Zeichnung nach links bewegt, so kommt der Reibbelag 50 an einer Reibscheibe 51 zum Angriff, die mit dem zweiten Abschnitt 37 des Planetenradträgers 13 fest verbunden ist. Die Reibscheibe 51 stützt sich über
ein Lager 52 auf dem in das Innere des Gehäuses hineinragenden Ende
der Abtriebswelle 39 ab.

In Abweichung von der dargestellten Ausführungsform kann die Abtriebswelle 39 noch eine Riemenscheibe oder ein Zahnrad tragen, um damit
weitere Hilfaggregate anzutreiben, z. B. eine Wasserpumpe.

Wenn der mit dem Lüfterantrieb versehene Verbrennungskraftmotor läuft,
dann dreht sich die Kurbelwelle 15. In der aus der Zeichnung ersichtlichen Position der Kupplungselemente 18,48 erfolgt aber keine Drehmomentübertragung auf die Abtriebswelle 39. Der Flansch 40 mit dem
damit verbundenen Lüfterrad steht still.

Wird nun aber das Kupplungselement 18 nach links verschoben, so überträgt dieses sich mit der Drehzahl der Kurbelwelle 15 drehende Element
über den Reibbelag 19 ein Drehmoment auf die mit der Sonnenradwelle
21 verbundene Scheibe 20, so daß sich das Sonnenrad mit seiner Verzahnung
27 dreht. Es ergibt sich dadurch auch eine Drehung der Planetenräder
28 sowie des Planetenradträgers 13. Wird nun das Kupplungselement 48
in kraftschlüssigen Angriff an die Reibscheibe 51 gebracht, die mit
dem zweiten Abschnitt 37 des Planetenradträgers 13 fest verbunden ist,
so wird die Drehung des Planetenradträgers 13 auf die Abtriebswelle 39 und damit auf den Flansch 40 übertragen.

Die Drehzahl der Abtriebswelle 39 bestimmt sich dann nach folgender
Formel:

$$n_1 = \frac{n_{kw}}{\frac{z_H}{z_S} + 1}$$

Dabei bedeutet:

$n_{kw}$ = Kurbelwellendrehzahl

$z_H$ = Zähnezahl des Hohlrades

$z_S$ = Zähnezahl des Sonnenrades.

Diese Schaltung des Lüfterantriebs ergibt vorzugsweise Drehzahlen
in der Größenordnung des 0,2- bis 0,5-fachen der Kurbelwellendrehzahl.

Wird nun das Kupplungselement 18 nach rechts bewegt, so daß sein Reibbelag 19 kraftschlüssig an der Scheibe 12 angreift, so wird der Sonnenradträger 13 mit einer Drehzahl angetrieben, welche der Kurbelwellendrehzahl entspricht. Bleibt dabei das Kupplungselement 48 in Wirkverbindung mit der Reibscheibe 51, so wird die Abtriebswelle 39 mit Kurbelwellendrehzahl angetrieben. Wird dagegen das Kupplungslement 48 nach
rechts verschoben, so daß sein Reibbelag 50 an der Scheibe 22 angreift,
die mit dem Sonnenrad 21 verbunden ist, dann entspricht die Drehzahl
der Abtriebswelle 39 derjenigen des Sonnenrades 21. Die Drehzahl ergibt
sich ebenfalls aus der oben für $n_1$ genannten Formel.

Diese Schaltung des Lüfterantriebs eignet sich insbesondere dafür, die Drehzahl des Lüfterrades auf das 2,5- bis 5-fache der Kurbelwellendrehzahl zu übersetzen.

Eine hiervon abweichende Übersetzung ergibt sich dann, wenn in Abweichung von der beigefügten Zeichnung auf dem Lagerzapfen 29 zwei drehfest miteinander verbundene Planetenräder unterschiedlichen Durchmessers angeordnet sind, von denen das eine mit dem Hohlrad 38 und das andere mit dem Sonnenrad kämmt.

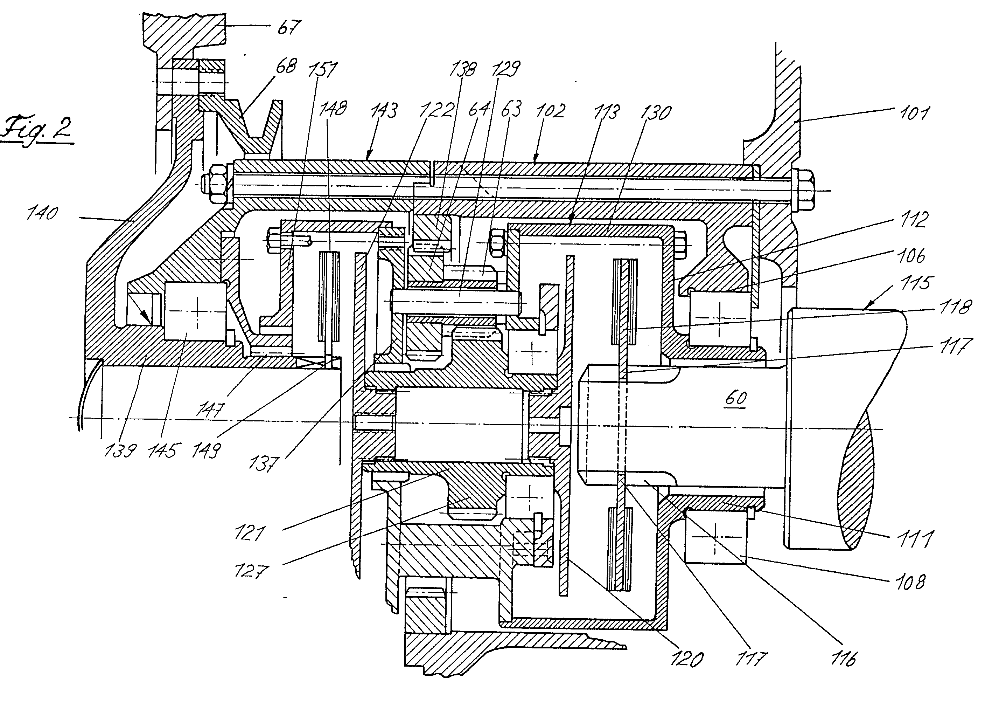

Die Ausführungsrom gemäß Fig. 2 des Lüfterantriebs ist weitgehend derjenigen nach Fig. 1 ähnlich. Mit einem Motordeckel 101 der Steuerseite eines im übrigen nicht dargestellten Verbrennungskraftmotors ist ein Gehäuse verbunden, das aus den beiden Gehäuseabschnitten 102 und 143 besteht. In einer Bohrung 106 des Gehäuseabschnitts 102 ist über ein Wälzlager 108 ein Bund 111 gelagert, an den sich ein Abschnitt 130 eines Planetenradträgers 113 anschließt. Ein Endabschnitt 60 einer Kurbelwelle 115 ragt in das Antriebsgehäuse hinein. Dieser Endabschnitt 60 ist mit mehreren axial verlaufenden Nuten 116 versehen, in die Zähne 117 eines scheibenförmigen ersten Kupplungselements 118 eingreifen. Über pneumatisch oder hydraulisch betätigte, nicht dargestellte Schaltorgane kann das Kupplungselement 118 in Axialrichtung der Kurbelwelle 115 verschoben werden. In der am weitesten nach rechts verschobenen Stellung tritt es in kraftschlüssige Verbindung mit einer Scheibe 112 des Abschnitts 130 des Planetenradträgers 113. Wird das Kupplungselement 118 in Fig. 2 nach links bewegt, so greift es kraftschlüssig an einer Scheibe 120 an, die mit einer Sonnenradwelle 121 drehfest verbunden ist. Das zweite Ende der Sonnenradwelle 121 ist ebenfalls mit einer Scheibe 122 drehfest gekoppelt. Zwischen diesen beiden Scheiben befindet sich ein Sonnenrad 127. Dieses Sonnenrad kämmt mit einem Planetenrad 63, das mit einem Planetenrad 64 größeren Durchmessers fest verbunden auf einem Lagerzapfen 129 sitzt. Das Planetenrad 64 kämmt mit einem Hohlrad 138, das fest in dem Gehäuseabschnitt 102 sitzt. Der Lagerzapfen 129 lagert einerseits in dem Abschnitt 130 und andererseits in einem Abschnitt 137 des Planetenradträgers 113, der über Lager auf der Sonnenradwelle 121 drehbar abgestützt ist. Es ist ein zweites Kupplungselement 148 vorgesehen, das über pneumatisch oder hydraulisch betätigte, nicht dargestellte Schaltorgane in axialer Richtung verschiebbar ist, wobei Zähne 149 des Kupplungselements zwischen Zähne einer Abtriebswelle 139 eingreifen. Die Abtriebswelle 139 ist über ein Wälzlager 145 sowie ein Gleitlager 147 in dem Gehäuseabschnitt 143 abgestützt. Im Bereich des Gleitlagers 147 befindet sich eine weitere Lagerstelle für den Planetenradträger 113, der hier eine Reibscheibe 151 bildet, mit der das Kupplungselement 148 dann zusammenarbeitet, wenn es in Fig. 2 nach links verschoben wird.

Bei dem Ausführungsbeispiel gemäß Fig. 2 reicht also die Kurbelwelle nicht durch den gesamten Lüfterantrieb hindurch, sondern endet vielmehr vor der Scheibe 120 der Sonnenradwelle 121. Die einzige Verbindung zwischen Kurbelwelle 115 und Planetengetriebe besteht im Eingriff des Kupplungselements 118 in die Nuten 116 des Wellenabschnitts 60.

Der Lüfterantrieb gemäß der Ausführungsform nach Fig. 2 arbeitet ebenso wie dies für die Ausführungsform nach Fig. 1 beschrieben wurde. Die Übersetzungsverhältnisse werden dabei aber beeinflußt dadurch, daß auf den Lagerzapfen 129 des Planetenradträgers 113 jeweils zwei Planetenräder 63,64 sitzen, die drehfest miteinander verbunden sind, aber unterschiedlichen Durchmesser haben.

Auch bei dieser Ausführungsform ist mit der Abtriebswelle 139 ein Flansch 140 verbunden. Dieser trägt ein Lüfterrad 67. Gleichzeitig ist mit dem Flansch 140 in dessen radial außenliegendem Bereich eine Riemenscheibe 68 verbunden, die zum Antrieb einer Kühlwasserpumpe verwendet werden kann.

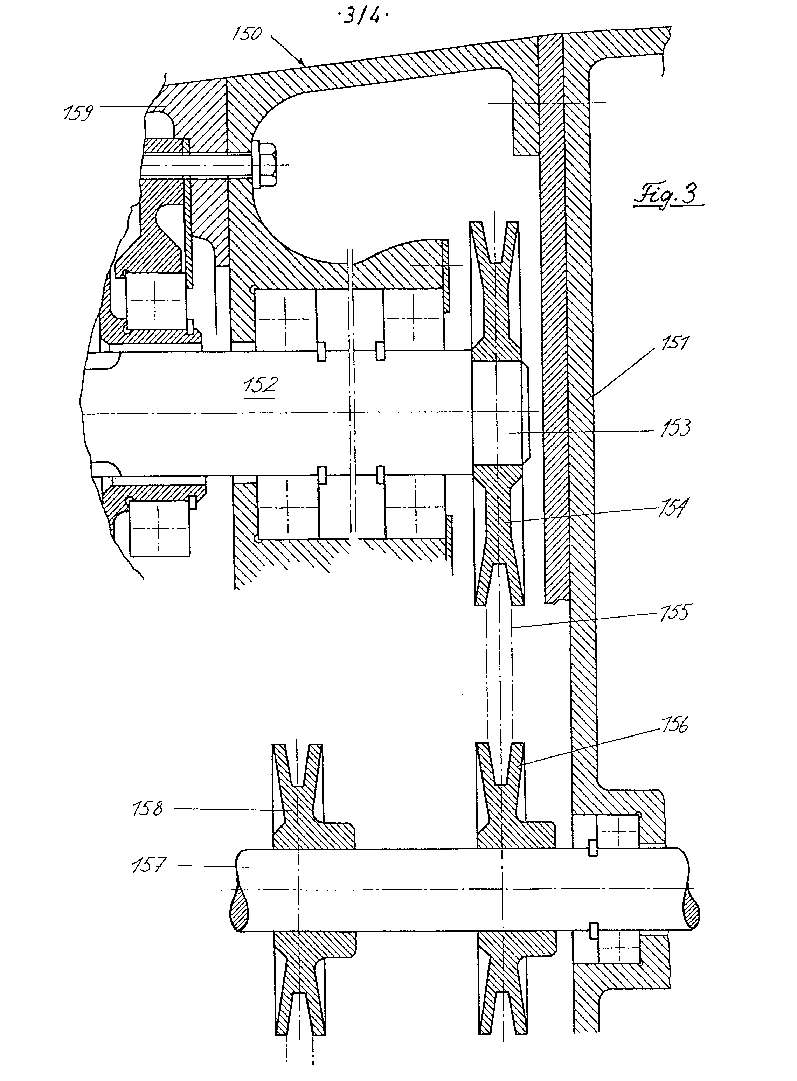

Die Ausführungsform des Lüfterantriebs gemäß Fig. 3 unterscheidet sich von denjenigen nach den Fig. 1 und 2 vor allem dadurch, daß hier ein Zwischengehäuse 150 mit einem Motordeckel 151 eines im übrigen nicht dargestellten Verbrennungskraftmotors verbunden ist. Dieses Zwischengehäuse 150 lagert das eine Ende einer Welle 152, die auf ihrem Endabschnitt 153 eine Keilriemenscheibe 154 trägt. Das Zwischengehäuse 150 ist im Bereich unterhalb dieser Riemenscheibe 154 offen, so daß ein Keilriemen 155 auf die Riemenscheibe 154 aufgelegt und von dieser aus zu einer Riemenscheibe 156 geführt werden kann, die mit dem aus dem Verbrennungsmotor vorstehenden Ende einer Kurbelwelle 157 drehfest verbunden ist. Auf der Kurbelwelle 157 sitzt eine zweite Riemenscheibe 158 zum Antrieb weiterer Hilfsaggregate.

Die in dem Zwischengehäuse 150 gelagerte Welle 152 ragt in der Weise, wie dies z. B. in Verbindung mit Fig. 1 oder 2 hinsichtlich des Endabschnitts 60 der Kurbelwelle 115 beschrieben wurde, in einen Gehäuseabschnitt 159 des Gehäuses eines Lüfterantriebs hinein, wobei der Lüfterantrieb entsprechend des Ausführungsformen nach Fig. 1 oder 2 ausgebildet sein kann.

Bei der Ausführungsform nach Fig. 3 verläuft die Welle 152 parallel zur Kurbelwelle 157. Auf die Riemenscheiben 156,158 können die Keilriemen frei aufgelegt werden. Die Zahl der Riemenscheiben kann noch erhöht werden.

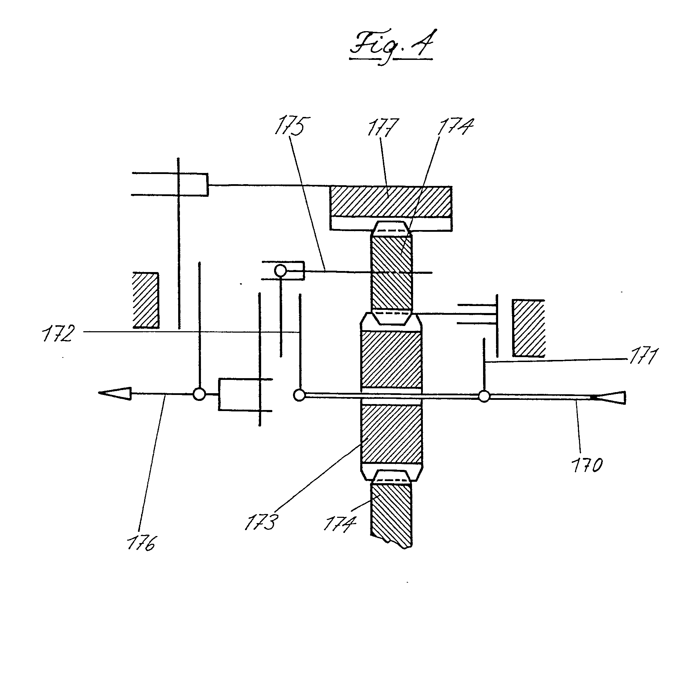

Fig. 4 schließlich zeigt ein Getriebeschema, wie es bei dem erfindungsgemäßen Lüfterantrieb ebenfalls verwirklicht werden kann. Dieses zeigt eine Antriebswelle 170, die mit zwei Kupplungselementen 171,172 drehfest gekoppelt ist.

Das erste Kupplungselement 171 ist mit einem Sonnenrad 173 koppelbar, das in der alternativen Schaltstellung festlegbar ist. Mit dem Sonnenrad 173 kämmen Planetenräder 174, die in einem drehbar gelagerten Planetenradträger 175 gelagert sind. Dieser Planetenradträger wiederum ist über das zweite Kupplungselement 172 mit der Antriebswelle 170 oder aber alternativ mit einer Abtriebswelle 176 koppelbar. Die Planetenräder 174 kämmen ferner mit einem Hohlrad 177, das drehbar gelagert ist und entweder festgelegt oder aber mit der Abtriebswelle 176 gekoppelt werden kann.

Wenn über die Antriebswelle 170 das Sonnenrad 173 bei festgelegtem Hohlrad 177 angetrieben wird, dann kann die Abtriebswelle 176 mit dem Planetenradträger 175 gekoppelt werden. Es lassen sich bei dieser Schaltstellung Lüfterdrehzahlen realisieren, die vorzugsweise etwa $(0,4 \div 0,2) \, n_{(kw)}$ (Kurbelwellendrehzahl) entsprechen.

Wird dagegen die Antriebswelle 170 mit dem Sonnenrad 173 gekoppelt und andererseits die Abtrieswelle 176 mit Planetenradträger 175 und Hohlrad 177 gekoppelt, so ist die Abtriebsdrehzahl gleich der Antriebsdrehzahl.

Koppelt man schließlich die Antriebswelle 170 mit dem Planetenradträger 175 und legt das Sonnenrad 173 fest, so kann an dem Hohlrad 177 eine Abtriebsdrehzahl abgenommen werden, die vorzugsweise das 1,2- bis 1,7-fache der Antriebsdrehzahl ausmacht.

Wenn beide Kupplungselemente 171,172 nicht wirksam sind, ergibt sich die Leerlaufstellung.

- 1 -

Patentansprüche:

1. Gestuft schaltbares Planetengetriebe mit einem Getriebegehäuse, einem Sonnenrad, einem Planetenradträger mit darin gelagerten Planetenrädern, einem Hohlrad sowie mit Kupplungselementen, welche die Elemente des Getriebes mit einer Antriebswelle und einer Ab- triebswelle koppeln, d a d u r c h  g e k e n n z e i c h n e t, daß das Getriebegehäuse (2,3;102,143) nur an dem Gehäuse eines Verbrennungskraftmotors abgestützt ist und alle Bauteile des Planetengetriebes nur am Getriebegehäuse (2,3;102,143) abgestützt sind, daß die Antriebswelle (15;115;170) des Getriebes die Kurbelwelle des Verbrennunsmotors oder eine parallel versetzt gekoppelte Welle ist und mit dem Getriebe über ein erstes Kupplungselement (18;118;171) in Form einer mit der Antriebswelle (15;115;170) drehfest verbundenen Kupplungsscheibe koppelbar ist, während die Abtriebswelle (39;139; 176) im Getriebegehäuse (2,3;102,143) gelagert ist, ein Lüfterrad (40;67) trägt und mit dem Getriebe über ein zweites Kupplungselement (48;148;172) in Form einer mit der Abtriebswelle (39;139;176) drehfest verbundenen Kupplungsscheibe koppelbar ist.

2. Planetengetriebe nach Anspruch 1, dadurch gekennzeichnet, daß die Antriebswelle (15) durch das Getriebegehäuse (2,43) hindurchführt und aus diesem heraus vorsteht.

3. Planetengetriebe nach Anspruch 1 oder 2, dadurch gekennzeichnet, daß die Abtriebswelle (139) drehmomentübertragend mit einer Riemenscheibe (68) versehen ist.

4. Planetengetriebe nach einem der vorhergehenden Ansprüche, dadurch gekennzeichnet, daß der Lüfterantrieb über ein Zwischengehäuse (150) am Gehäuse des Verbrennungsmotors abgestützt ist, daß die Antriebswelle (152) im Zwischengehäuse (150) gelagert ist und eine Riemenscheibe (154) trägt, welche über einen Keilriemen (155) mit einer Riemenscheibe (156) der Kurbelwelle (157) in Antriebsverbindung steht.

Fig. 1

1/4.

0028390

Fig. 2

_Fig. 3_

Fig. 4